# EUROPEAN PATENT SPECIFICATION

(11) **EP 1 564 113 B1**
(45) Date of publication and mention of the grant of the patent: **13.12.2006**
(21) Application number: 05250619.3
(22) Date of filing: 04.02.2005
(51) Int. Cl.: B62D 21/18, B62D 55/06, B62D 55/10, E02F 9/02, E02F 9/08, E02F 9/12

(54) **Crawler frame**
Raupenfahrwerksrahmen
Chassis à chenilles

(30) Priority: 10.02.2004 JP 2004033331; 09.06.2004 JP 2004171701
(43) Date of publication of application: 17.08.2005
(73) Proprietor: Komatsu Ltd, Minato-ku, Tokyo (JP); KOMATSU ZENOAH CO., Saitama 350-1192 (JP)
(72) Inventor: Mimuro, Junji c/o Komatsu Zenoah Co., Kawagoe-shi, Saitama (JP); Endo, Takeshi c/o Komatsu Zenoah Co., Kawagoe-shi, Saitama (JP); Senba, Shinichi c/o Komatsu Zenoah Co., Kawagoe-shi, Saitama (JP)
(74) Representative: Luckhurst, Anthony Henry William

(56) References cited:
- EP-A- 1 426 497
- EP-A- 1 457 605
- EP-A- 1 479 831
- EP-A- 1 479 833
- WO-A-03/042022

## Description

### BACKGROUND OF THE INVENTION

### 1. Field of the Invention

The present invention relates to a crawler frame in a crawler traveling apparatus having right and left rotatable crawlers corresponding to an endless track band.

### 2. Description of the Related Art

Conventionally, in construction machines, earth-machining machines, agricultural machines, carriage vehicles, traveling vehicles and the like, there is employed a crawler traveling apparatus having right and left rotatable crawlers corresponding to an endless track band. The crawler traveling apparatus is constituted of a pair of track frames supporting the rotatable crawlers corresponding to the endless track band in the right and left sides, a machine body frame provided between the track frames, and a main machine mounted on the machine body frame.

The machine body frame is constituted of a center frame supporting the main machine and one or more leg supports provided in both right and left sides of the center frame, and a leading end portion of each of the leg supports is firmly fixed to each of the pair of track frames by a welding operation. Further, the main machine employs a structure which can be revolved on the machine body frame called as an upper revolving body, and a structure which is fixed onto the machine body frame. As the main machine mounted on the machine body frame, there are a working machine, a cabin, a driver seat, an engine, a control apparatus and the like.

The center frame and the leg support constituting the machine body frame are configured as separate bodies, and the center frame and the leg support are firmly fixed by welding therebetween. Further, in order to sufficiently support a load applied to the center frame, the leg support connecting between the center frame and the track frame is configured by a steel plate or the like, and the center frame and the leg support, and the leg support and the track frame are firmly fixed respectively therebetween by the welding operation.

As the configuration of the center frame and the leg support, there has been proposed a crawler frame configured such that the center frame is composed of the steel plate and the leg support is composed by bending a hollow circular pipe member or steel plate and the like(refer to an International Publication WO/03/042022).

In this case, in the International Publication WO/03/042022, the crawler frame of the present invention is called as a track frame, and the track frame and the leg support of the present invention are respectively called as a side frame and a leg portion. However, a description of the International Publication WO/03/042022 will be given in the present specification by using the terms used in the present invention as mentioned above.

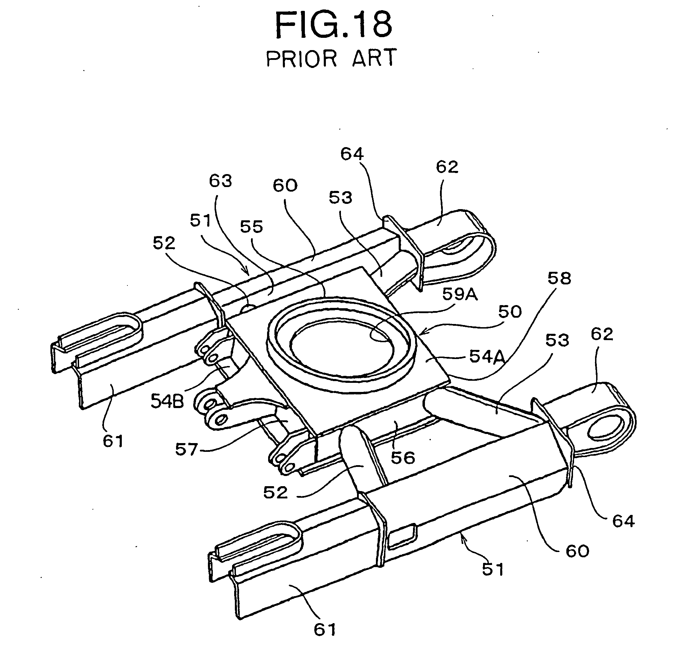

The crawler frame described in the International Publication WO/03/042022 is constituted of a center frame 50, right and left track frames 51 and 51 positioned in both right and left sides of the center frame 50, and a pair of front leg support 52 and rear leg support 53 connecting the track frames 51 and 51 to the center frame 50, as shown in Fig. 18.

The center frame 50 is formed in an approximately rectangular flat shape by using a steel plate or the like, and a round body 55 for attaching a revolving bearing to a center is firmly fixed to an upper plate 54A of the center frame 50. Further, side plates 56 and 56, a front plate 57, a rear plate 58 and the like are bonded between the upper plate 54A and a lower plate 54B by a welding operation, and the center frame 50 is formed as a box structure body. Further, a through hole 59A is pierced in a vertical direction in the center frame 50 in order to receive a center joint (not shown) or the like.

Each of the track frames 51 and 51 is constituted of an intermediate frame 60, an idle wheel bracket portion 61, a motor bracket portion 62 and the like. A crawler is attached to the track frames 51 and 51 between an idle wheel and a drive wheel.

Each of the right and left front leg supports 52 and 52 bonded by welding to each of the side plates 56 of the center frame 50 is formed by using a hollow circular pipe member, and a leading end thereof is bonded by welding to a side plate portion 63 of the intermediate frame portion 60 of the track frame 51. Further, each of the rear leg supports 53 and 53 formed by using a pipe member having a hollow circular horizontal cross section in a same manner as that of the front leg supports 52 and 52 is configured such that one end portion is bonded by welding to a corner side between the side plate 56 and the rear plate 58 of the center frame 50, and the other end portion is bonded by welding between a rear position of the intermediate frame portion 60 and a connection flange 64 in a side of the motor bracket portion 62.

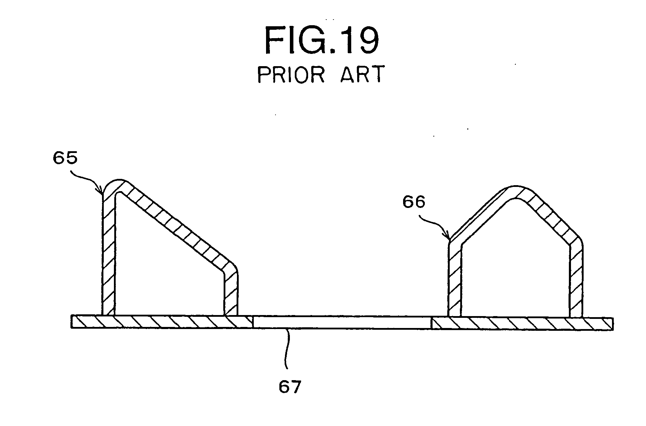

In addition, in a configuration of another track frame described in the International Publication WO/03/042022, a front leg support 65 and a rear leg support 66 are configured such that upper plates of the front leg support 65 and the rear leg support 66 are formed by a steel plate in a trapezoidal shape by press molding means as shown in Fig. 19 which shows respective horizontal cross sections of the front leg support 65 and the rear leg support 66, and a lower plate 67 is welded to respective folded end portions.

As shown in the International Publication WO/03/042022, the conventionally used crawler frame is constituted of the right and left track frames, and the machine body frame arranged between the track frames. Further, the machine body frame is constituted of the center frame and the leg supports which are configured as the separate bodies. Said document discloses a crawler frame according to the preamble of claim 1.

It is necessary that the center frame is provided with a sufficient strength for supporting the machine body such as the upper revolving body mounted on the center frame, and a strength capable of standing up to a working load of the upper revolving body, and it is necessary that the center frame is secured of a strength required for dispersing the working load in the center frame to the track frame.

In order to share the working load in correspondence to a load share applied to the track frame at a time of traveling and working, the cross sectional shapes of the front leg support and the rear leg support have been differentiated. It is necessary to be secured of respective desired strengths with respect to the center frame and the leg supports, by making the center frame and the leg supports as respective unique configurations so as to obtain the separate bodies.

However, since the machine body frame is constituted of the center frame and the leg support which are configured as the separate bodies, a bent portion is formed in a joint portion between the center frame and the leg support, and there is a problem that a stress concentration is generated in the bent portion or the like. Accordingly, it is necessary to use a plate member having a thickness which can stand up to a stress concentration, and use a reinforcing member such as a rib shape, thereby forming the center frame and the leg supports as a reinforced configuration.

Further, it is necessary to form the center frame and the leg support by a plate member having a thickness which can stand up to a maximum stress in a stress applied to each portions of the center frame and the leg support, and it is necessary to form the reinforcing member or the like such as the rib shape in an inner portion of the center frame and the leg support. Accordingly, the structures of the center frame and the leg support are complicated, and weights thereof are made heavy.

It is possible to integrally form the center frame and the leg support by molding means such as casting means, pressing means and forging means in a desk plan idea, but in this case, it is necessary to integrally form the leg support having a rectangular or cylindrical horizontal cross sectional shape formed as a hollow body for reducing the weight and obtaining the strength, and the center frame having the upper surface portion and the lower surface portion, by molding means. However, there can not be found a countermeasure for achieving a molding method of integrally forming the leg support having the hollow body and the center frame by the molding means, and a shape of the machine body frame which can be integrally formed.

### SUMMARY OF THE INVENTION

An object of the present invention is to solve the problem mentioned above, and to provide a crawler frame provided with a machine body frame which is integrally formed by molding means such as casting means, pressing means and forging means.

The object of the present invention can be achieved by each of the inventions described in first to thirteenth aspects.

That is, in accordance with a main feature, as described in a first aspect of the present invention, there is provided a crawler frame comprising: a machine body frame constituted of a center frame supporting a main machine and one or more leg supports provided in both right and left sides of the center frame; and a pair of right and left track frames provided in leading end sides of the respective leg supports, wherein at least one surface portion of an upper surface portion and a lower surface portion in the machine body frame is formed as an open surface portion, and a side wall portion connecting the upper surface portion and the lower surface portion in the machine body frame, the upper surface portion and/or the lower surface portion opposing to the open surface portion in the center frame of the machine body frame, and the upper surface portion or the lower surface portion opposing to the open surface portion in the leg support of the machine body frame are integrally formed by molding means.

Further, as described in a second aspect of the present invention, at least the open surface portion in the respective leg supports is covered by a plate member serving as a lid body, and a portion near a side edge portion of the open surface portion and the plate member are firmly fixed to each other by a welding operation.

Further, as described in a third aspect of the present invention, the main machine is constituted of an upper revolving body, and a revolving bearing supporting the upper revolving body is supported to the upper surface portion of the center frame.

Further, as described in a fourth aspect of the present invention, each of the leg supports provided in both the right and left sides of the center frame is formed in a fork shape in a longitudinal direction in a root portion thereof.

Further, as described in a fifth aspect of the present invention, an outer surface shape of the machine body frame integrally formed by the molding means is formed by a smooth curved surface.

Further, as described in a sixth aspect of the present invention, the upper surface portion of each of the leg supports is formed in an inclined surface which is formed in an approximately circular arc shape in a width direction of the leg support, and the inclined surface is formed as a downward inclined surface from the center frame to the track frame.

Further, as described in a seventh aspect of the present invention, a part of a first approximately conical shape is formed in the upper surface portion of the leg support, the first approximately conical shape is formed in a downward slope from the center frame toward the track frame in which the center frame side is set to an apex direction of the first approximately conical shape and the track frame side is set to a bottom line side of the first approximately conical shape.

Further, as described in an eighth aspect of the present invention, a part of a second approximately conical shape is formed in a bottom surface portion of the leg support, and the second approximately conical shape is formed in a downward slope from the center frame toward the track frame in which the center frame side is set to an apex direction of the second approximately conical shape and the track frame side is set to a bottom line side of the second approximately conical shape.

Further, as described in a ninth aspect of the present invention, the center frame is formed in an approximately U-shape having an open hole in a center portion thereof in a horizontal cross sectional shape of the center frame.

Further, as described in a tenth aspect of the present invention, the weld bonded portion between the leading end portion of the leg support and the track frame is bonded by a smooth curved surface.

In addition, as described in an eleventh aspect of the present invention, an entire or a part of a support bracket rotatably supporting at least a blade and/or a cylinder bracket supporting a cylinder for rotating the blade is integrally formed with the machine body frame by molding means.

Further, as described in a twelfth aspect of the present invention, a mounting hole formed in each of the support bracket rotatably supporting at least the blade and/or the cylinder bracket supporting the cylinder for rotating the blade is formed at a forward position of the leading end portion of the leg support without lapping over the leading end portion of the leg support arranged in a front side in a side view of the crawler frame.

Further, as described in a thirteenth aspect of the present invention, the mounting hole of an inside arranged bracket of the support bracket and the cylinder bracket is formed without lapping over an outside arranged bracket of the support bracket and the cylinder bracket, in the side view of the crawler frame.

According to the present invention, in the crawler frame provided with the pair of right and left track frames, and the machine body frame arranged between the pair of track frames, the configuration of the machine body frame is constituted by a unique configuration. In other words, at least one surface portion of the upper surface portion and the lower surface portion in the machine body frame is formed as the open surface portion, and the side wall portion connecting the upper surface portion and the lower surface portion in the machine body frame, the upper surface portion and/or the lower surface portion opposing to the open surface portion in the center frame of the machine body frame, and the upper surface portion or the lower surface portion opposing to the open surface portion in the leg support of the machine body frame are integrally formed by the molding means such as the casting means, the pressing means and the forging means.

Accordingly, since the upper surface portion and/or the lower surface portion of the machine body frame is formed in an open shape, it is possible to integrally form the machine body frame without using a core or the like, when integrally forming the machine body frame by the molding means such as the casting means, the pressing means and the forging means. As a result, it is possible to form the integrally formed machine body frame by using a male mold and a female mold which are relatively, mutually and linearly moved close to and apart from each other, and pouring a molten metal into a space formed between the male mold and the female mold.

Moreover, it is possible to form by optimizing a thickness and a shape required in respective positions in the center frame of the machine body frame and the leg support which are integrally formed, and it is possible to achieve a weight reduction of the machine body frame while keeping a rigidity of the machine body frame without using the reinforcing member such as the rib shape for improving the strength. In addition, it is possible to reduce a number of parts on a basis of the integrally formed machine body frame, and it is possible to reduce weld position and weld man-hours.

It is possible to do away with the bent portion to which the stress concentration is generated by forming the outer surface shape of the integrally formed machine body frame by the smooth curved surface, and it is possible to disperse the stress applied to the machine body frame to an entire of the machine body frame. In particular, the machine body frame can be configured without being provided with the weld bonded portion between the leg support and the center frame in which the stress concentration tends to be generated. Accordingly, it is possible to prevent the stress concentration from being generated at a specific position of the machine body frame, and it is possible to improve a mold release of the male mold and the female mold in the casting means, the pressing means, the forging means and the like for integrally forming the machine body frame.

Further, the shape in the weld bonded portion between the leg support and the track frame can be formed as the smooth curved surface shape, and it is possible to smoothly transmit a force from the leg support to the track frame and smoothly transmit a force from the track frame to the leg support. Accordingly, it is possible to prevent the stress concentration from being generated in the weld bonded portion between the leg support and the track frame, and it is possible to improve the strength of the crawler frame.

In the case that the shape of the upper surface portion and the shape of the bottom surface portion of the leg support are formed as the partial curved surface shape of the approximately conical shape as described in the seventh aspect or the eighth aspect, it is possible to smoothly transmit a force such as a working load transmitted from the track frame at the traveling time, the revolving time or the working time of the working machine to the center frame or the open hole or the like formed in the upper surface portion of the center frame via the leg support. Further, it is possible to smoothly transmit the load or the like applied to the center frame, to the track frame via the leg support.

The horizontal cross sectional shapes of the front leg support and the rear leg support can be formed in the different shapes in correspondence to the stress applied to the front leg support and the rear leg support. Further, the arrangement of a pair of right and left front leg supports and a pair of right and left rear leg supports can employ an approximately X-shaped arrangement and an approximately H-shaped arrangement in a plan view. As to the arrangement of the front leg support and the rear leg support, since a space portion can be secured between the lower surface portion of the center frame and a ground surface by arranging them so as to form the downward slope from a center frame side toward a track frame side, a desirable arrangement can be achieved.

Further, in the case that the outer surface shape of the integrally formed machine body frame is formed by the smooth curved surface, it is possible to slide off dirt soil by the smooth curved surface shape even if a part of the dirt soil splashed at the traveling and revolving times and at the working time of the working machine arranged on the center frame is attached onto the machine body frame. In other words, it is possible to prevent the dirt soil from being attached to the machine body frame, and it is possible to improve a mud scraping performance in the machine body frame. Accordingly, it is possible to easily execute a washing, maintenance and the like of the crawler frame.

In addition, as the leg support, it is preferable that one or more leg supports are arranged in each of both right and left sides of the center frame, and the configuration may be made such that the leg support is formed in the fork shape in the longitudinal direction, in the root portion of each of the leg supports provided in both the right and left sides of the center frame, as described in the fourth aspect. In the case that the leg support is formed in the fork shape in the longitudinal direction, and the forward direction and the backward direction are respectively set as the front leg support and the rear leg support, a space portion can be formed between the front leg support and the rear leg support. The leg support may be configured such that the front leg support and the rear leg support are integrally formed and the space portion is not provided.

A part of the dirt soil splashed at the traveling and revolving times and the working time of the working machine arranged on the center frame is attached to the upper surfaces of the front leg support and the rear leg support. However, the dirt soil attached to the front leg support and the rear leg support can be easily scraped from the space portion formed between the front leg support and the rear leg support and the front and rear sides of the front leg support and the rear leg support to the ground surface, due to a vibration generated at the traveling and revolving times and at the working time of the working machine arranged on the center frame.

In order to improve the mud scraping performance of the dirt soil attached to the upper surface portions of the front leg support and the rear leg support, in the case that the upper surface portion of the leg support is formed in the approximately circular arc shape in the width direction, and the leg support is configured so as to form the downward slope from the center frame toward the track frame, as described in the sixth aspect, a desirable shape is achieved in view of reducing the attachment of the dirt soil. At this time, it is possible to improve the mud scraping performance by employing a configuration in which an area width of the upper surface portion is reduced as it comes closer to the track frame.

Further, the mud scraping performance can be improved by forming the partial curved surface shape of the approximately conical shape in the upper surface portion of the leg support as described in the seventh aspect. The dirt soil is hard to be accumulated on the upper surface of the leg support by forming the upper surface portion of the leg support in a convex shape, and even if the dirt soil is accumulated on the upper surface of the leg support, it is possible to easily slide down the dirt soil due to the vibration at the traveling time and the like.

Accordingly, the accumulation on the upper surface of the leg support is not generated, or even if the accumulation is generated, an amount thereof is very small. Therefore, in the case that the upper revolving body is mounted on the crawler frame, it is possible to prevent the dirt soil from making an intrusion into the revolving bearing of the upper revolving body, and it is possible to prevent the dirt soil accumulated on the leg support or the like at the revolving time of the upper revolving body and the upper revolving body from being brought into contact with each other so as to generate a revolving resistance. Further, it is possible to reduce a washing water amount and a washing step of washing the crawler frame, and even if a rental supplier or the like washes the crawler frame or the like, it is possible to reduce an amount of the dirt soil stored in a washing place.

In this case, the open surface portion mentioned above is not limited to be formed in one of the upper surface portion and the lower surface portion of the machine body frame, and the horizontal cross sectional shape of the leg support can be formed in an approximately U-shaped form or an approximately inverted U-shaped form. In the center frame, it is possible to employ a configuration in which both upper and lower surface portions are formed as open surface portions in a partial position, and an upper surface portion side or a lower surface portion side is integrally formed in the other position, a configuration in which an upper surface portion side is integrally formed in a partial position, a lower surface portion side is integrally formed in the other position, and the surface portion opposing to the integrally formed upper surface portion side and lower surface portion side is formed as the open surface portions, a configuration in which an upper surface portion side or a lower surface portion side is integrally formed, or the like.

As the shape of the center frame, as described in the ninth aspect, it is possible to form in the approximately U-shaped horizontal cross sectional shape having the open hole in the center of the lower surface portion, by employing the configuration in which the center frame is integrally formed with the lower surface portion. In other words, the open hole mounting the revolving bearing for rotationally supporting the upper revolving body thereon is formed in the upper surface portion of the center frame, and the center frame having the bottom surface is integrally formed with the leg support in the lower surface. As a configuration in which the open hole is formed in the upper surface portion of the center frame, it is possible to employ an appropriate shape such as a configuration in which the horizontal cross sectional shape of the center frame is formed in the approximately U-shaped form, and a configuration in which the center frame is formed in the approximately cylindrical shape, as described in the ninth aspect.

In the case that the open surface portion in at least the leg support of the open surface portion in the machine body frame is covered by the plate member such as the steel plate, the plate member can be set to a lid body of the open surface portion. The plate member serving as the lid body mentioned above can be formed in a position in which it is necessary to form the lid body in the center frame. Further, the lid body formed in the leg support and the lid body formed in the center frame can be configured by the same plate member in correspondence to formed positions of the respective lid bodies. The open surface portion in which the plate member serving as the lid body is arranged, and the plate member covering the open surface portion can be formed by bonding by welding both elements near the side edge portion of the open surface portion.

It is possible to improve a strength in the leg support and the center frame by forming the lid body for covering the open surface portion. Further, it is possible to prevent the dirt soil or the like from making an intrusion into the center frame and the leg support.

In addition, in the case that the blade or the like is arranged in the front side of the crawler frame, it is possible to integrally form an entire or a part of the support bracket for rotatably supporting the blade or the like and the cylinder bracket for bearing the end portion of the cylinder rotating the blade or the like with the machine body frame by the molding means. It is possible to reduce a number of parts by integrally forming an entire configuration in at least one of the support bracket and the cylinder bracket or a support portion of the support bracket and the cylinder bracket together with the machine body frame.

Further, at this time, it is desirable to arrange a position of the mounting hole formed in the support bracket and the cylinder bracket at a position which does not lap over the leading end portion of the front leg support arrange in the front side in a side view of the crawler frame, and at a forward position of the leading end portion of the leg support, as described in the twelfth aspect.

As a positional relationship between the mounting holes respectively formed in the support bracket and the cylinder bracket, it is desirable to employ a positional relationship in which a formation of one mounting hole is not disturbed by another bracket. In other words, as the positional relationship in which the formation of one mounting hole is not disturbed by another bracket, it is possible to employ a positional relationship in which the formation of one mounting hole is not disturbed by another bracket, in a positional relationship in a vertical direction and/or a positional relationship in a longitudinal direction, in view of a positional relation in a side view of the frame.

Alternatively, it is possible to employ a positional relationship in which the formation of one mounting hole is not disturbed by another bracket, by forming one bracket and another bracket so as to have a positional relationship in which they are apart from each other, in view of the positional relationship in a front view of the frame. Or, it is possible to employ a positional relationship in which the formation of one mounting hole is not disturbed by another bracket, by appropriately combining the positional relationships mentioned above.

In particular, as described in the thirteenth aspect, it is desirable that the mounting hole of the inside arranged bracket in the support bracket and the cylinder bracket is formed at the position in which the mounting hole does not lap over the outside arranged bracket in the support bracket and the cylinder bracket, in the side view of the crawler frame.

Accordingly, when forming the mounting holes in the support bracket and the cylinder bracket by drilling or the like, it is possible to form the respective mounting holes while preventing a tool for drilling or the like from being interfered with the front leg support and the bracket arranged in the outer side. Further, it is easy to center the mounting hole in the case of forming the mounting hole by drilling or the like, and it is possible to improve a working accuracy of the mounting hole.

Since the mounting hole formed in the inside arranged bracket is arranged at the position which does not lap over the outside arranged bracket, it is possible to be formed without being disturbed by the outside arranged bracket. Further, the mounting hole formed in the outside arranged bracket can be formed without being disturbed by the inside arranged bracket.

Since the outside arranged bracket and the inside arranged bracket are apart from each other in the front view of the frame, the working tool processing the mounting hole of the outside arranged bracket can form the mounting hole on the outside arranged bracket without being brought into contact with the inside arranged bracket. At this time, when the mounting hole of the outside arranged bracket is further arranged at the position which does not lap over the inside arranged bracket, it is possible to securely prevent the working tool processing the mounting hole in the outside arranged bracket from being brought into contact with the inside arranged bracket even after processing the mounting hole.

With respect to a mounting strength of the support bracket and the cylinder bracket to the machine body frame, a desired strength can be obtained by optimizing the shape and the thickness in a mounting portion. Further, since it is possible to form a portion near a support portion of the bracket in the joint portion between the bracket and the machine body frame in a smooth shape, it is possible to integrally form both the elements by a smooth curved surface from the bracket toward the machine body frame without generating the stress concentration. Further, it is possible to set a strength of the bracket to an optimum strength.

Members integrally formed with the machine body frame is not limited to the support bracket and the cylinder bracket, but another structure members can be integrally formed with the machine body frame. Further, it is also possible to integrally form a part of the structure member mentioned above with the machine body frame such as to integrally form other positions than a boss portion in the support bracket and the cylinder bracket, the support portion of the bracket and the like with the machine frame.

### BRIEF DESCRIPTION OF THE DRAWINGS

Fig. 1 is a side view showing a hydraulic excavator in accordance with an embodiment of the present invention (first embodiment);
Fig. 2 is an entire perspective view as viewing a crawler frame from an upper surface thereof (first embodiment);
Fig. 3 is an entire perspective view as viewing the crawler frame from a bottom surface thereof (first embodiment);
Fig. 4 is an entire perspective view as viewing from an upper surface of a machine body frame (first embodiment);
Fig. 5 is an entire perspective view as viewing from a bottom surface of the machine body frame (first embodiment);
Fig. 6 is a plan view of the machine body frame (first embodiment);
Fig. 7 is a right side view of the machine body frame (first embodiment);
Fig. 8 is a cross sectional view taken along a line VIII-VIII in Fig. 6 (first embodiment);
Fig. 9A is a cross sectional view taken along a line IX-IX in Fig. 6, and Fig. 9B is a cross sectional view taken along a line IX'-IX' in Fig. 6 (first embodiment);
Figs. 10A and 10B are view of cut area cross sections taken along lines X-X and X'-X' in Fig. 6 (first embodiment);
Fig. 11 is a perspective view showing a modified embodiment of a mounting structure of a bottom plate (second embodiment);
Fig. 12 is a cross sectional view of a front leg support taken along a line XII-XII in Fig. 11 (second embodiment);
Fig. 13 is a cross sectional view of the front leg support and a center frame (second embodiment);
Fig. 14 is a perspective view of a structure obtained by integrally forming a bracket and a vicinity area (third embodiment);
Fig. 15 is a view showing a forming position of a mounting hole (first and third embodiments);
Fig. 16 is a side view in Fig. 15 (first and third embodiments);
Fig. 17 is a view showing a modified embodiment of a bottom plate (fourth embodiment);
Fig. 18 is an entire perspective view of a crawler frame (prior art); and
Fig. 19 is a horizontal cross sectional view of a front leg support and a rear leg support (prior art).

### DESCRIPTION OF THE PREFERRED EMBODIMENTS

A description of a preferable embodiment will be specifically given below in accordance with the present invention with reference to the accompanying drawings. As a configuration of a crawler frame according to the present invention, a description of the configuration of the crawler frame will be given below by exemplifying a hydraulic excavator in a construction machine. However, the configuration of the crawler frame according to the invention is not limited to that of the crawler frame of the hydraulic excavator, but can be applied to a crawler frame used in a construction machine, an earth-machining machine, an agricultural machine, a traveling vehicle, a carriage vehicle and the like other than the hydraulic excavator.

Further, in addition to a shape and an arrangement described below, all shapes and arrangements can be employed as far as they can achieve the object of the present invention. Accordingly, the invention is not limited to the embodiments described below, but various modifications can be employed.

### First embodiment

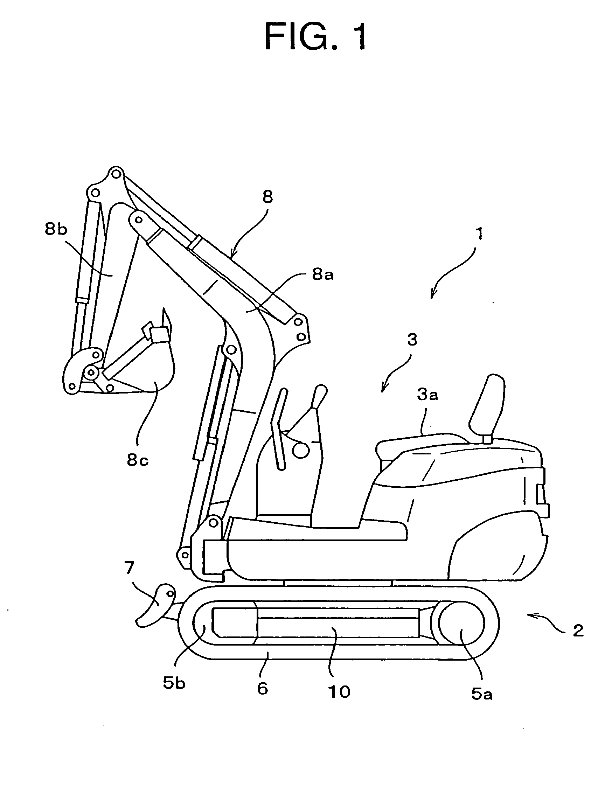

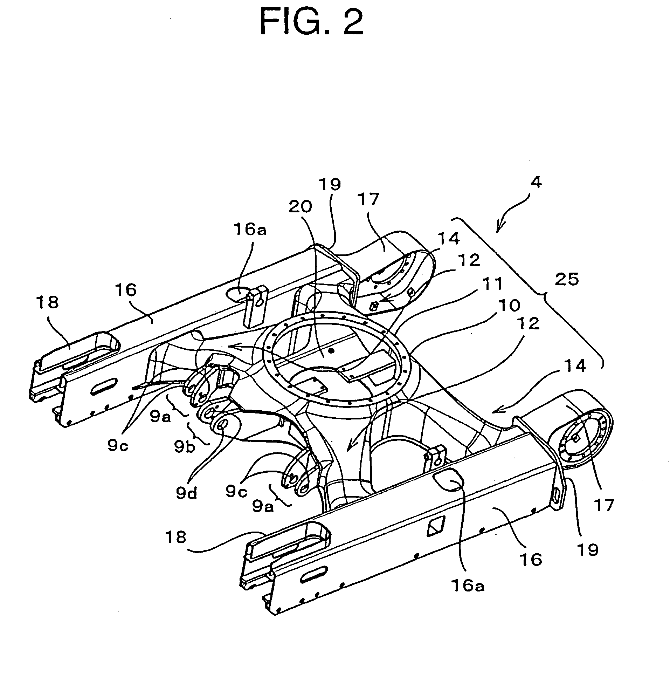

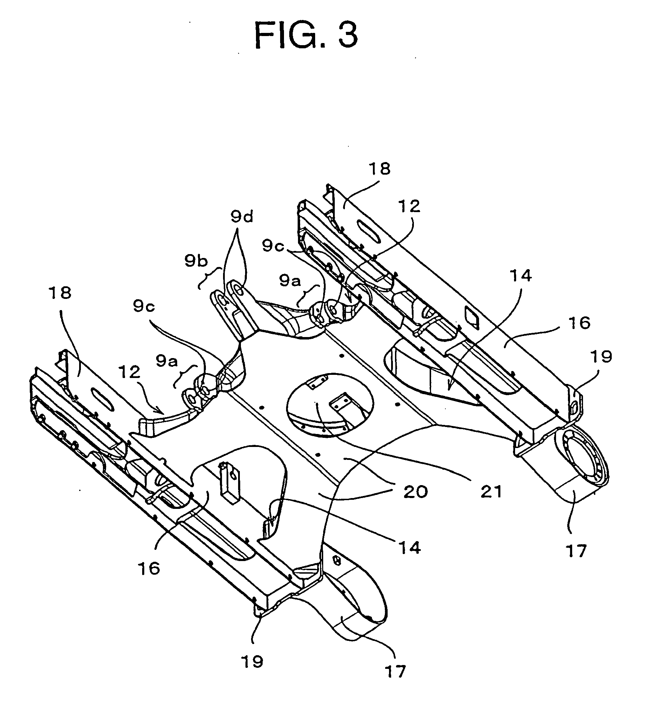

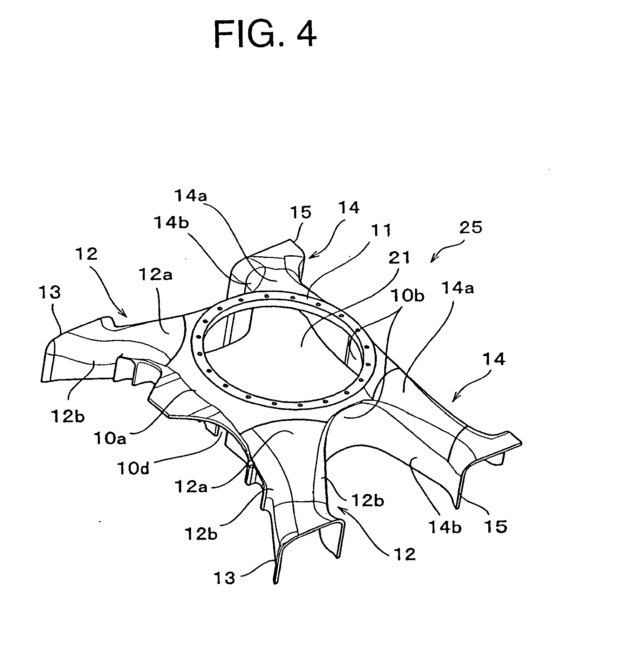

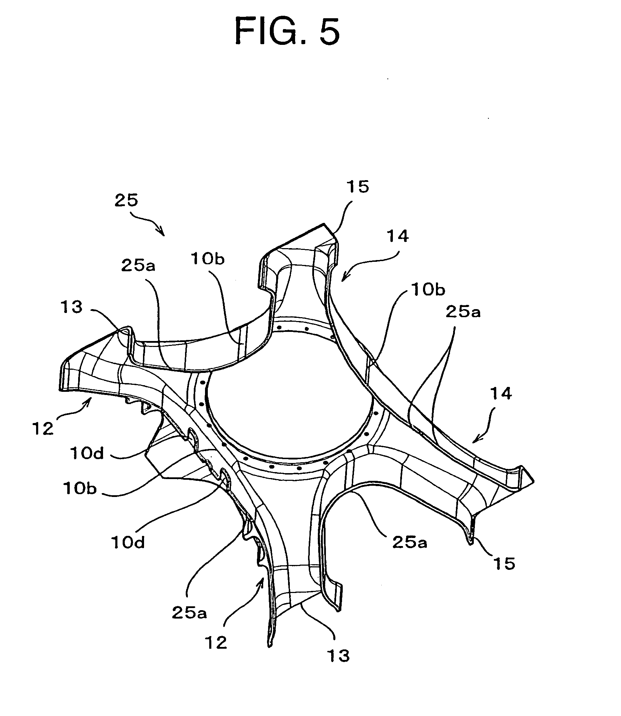

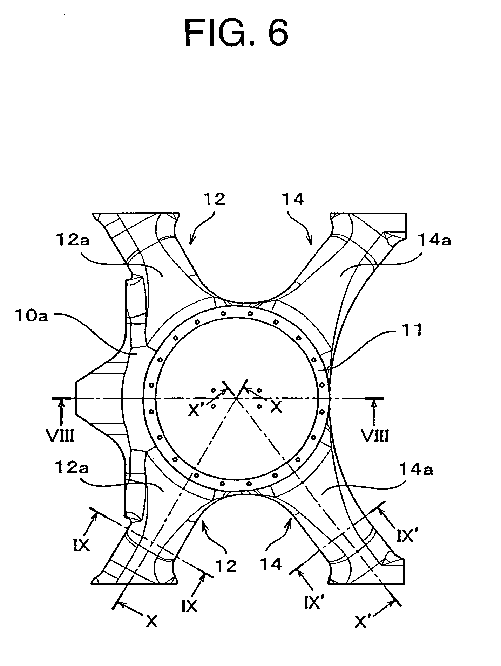

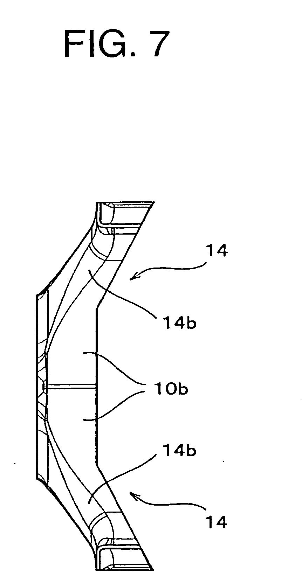

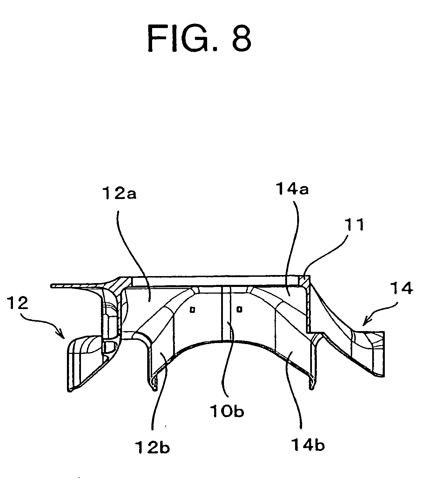

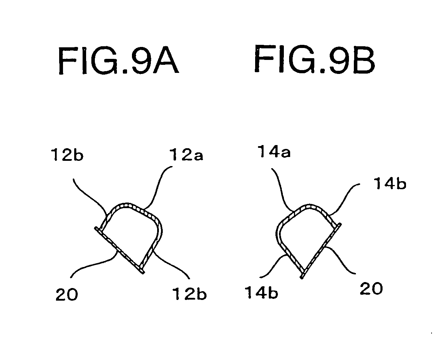

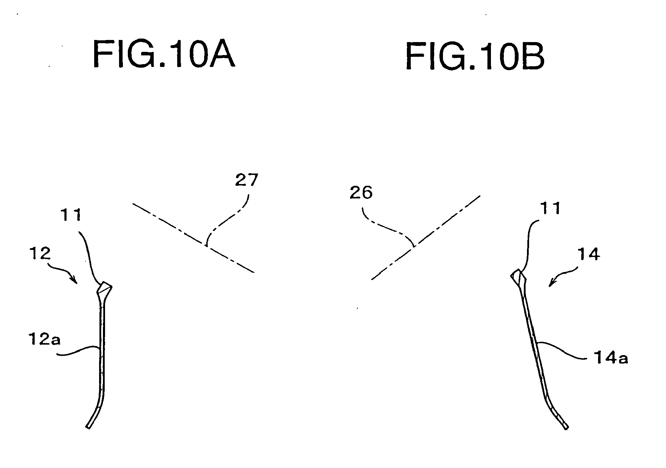

Fig. 1 is a side view showing a hydraulic excavator according to an embodiment of the present invention. Fig. 2 is an entire perspective view as viewing a crawler frame in a lower traveling body from an upper surface thereof, and Fig. 3 is an entire perspective view as viewing the crawler frame from a bottom surface thereof. Fig. 4 is an entire perspective view as viewing from an upper surface of a machine body frame, and Fig. 5 is an entire perspective view as viewing from a bottom surface thereof. Fig. 6 is a plan view of the machine body frame, and Fig. 7 is a right side view in Fig. 6. Fig. 8 is a cross sectional view taken along a line VIII-VIII in Fig. 6. Fig. 9A is a cross sectional view taken along a line IX-IX in Fig. 6, and Fig. 9B is a cross sectional view taken along a line IX'-IX'. Figs. 10A and 10B are view showing cross sections of cut areas in cross sections X-X and X'-X' in Fig. 6.

As shown in Fig. 1, a hydraulic excavator 1 of a construction machine is provided with a lower traveling body 2 in which a crawler 6 for traveling is placed, and an upper revolving body 3 which is mounted so as to freely revolve via a revolving bearing (not shown) in an upper portion thereof. A driver seat 3a for an operator is arranged in an upper portion of the upper revolving body 3, and a hydraulically driven working machine 8 is pivoted to a front side of the driver seat 3a so as to freely swing. A boom 8a, an arm 8b and an excavating bucket 8c attached to a leading end of the arm 8b are arranged in the working machine 8.

On the other hand, a blade 7 or the like is provided in a front side of the lower traveling body 2 so as to freely rotate in a vertical direction. It is possible to execute a soil discharging work of sediment or the like, a road grading work and the like by the blade 7. Further, the lower traveling body 2 is configured such that a drive wheel 5a and a driven wheel 5b are respectively attached to both end portions of each of right and left track frames 16, and a crawler 6 is wound around the drive wheel 5a and the driven wheel 5b.

As shown in Figs. 2 and 3, a crawler frame 4 is constituted of a pair of right and left track frames 16 and 16, and a machine body frame 25 arranged between the track frames 16 and 16. The machine body frame 25 is constituted of a center frame 10, front leg supports 12 and 12, and rear leg supports 14 and 14 which are provided in both right and left sides of the center frame 10. Each of the front leg supports 12 and the rear leg supports 14 is configured so as to be formed in a fork shape in a longitudinal direction in a root portion thereof. The center frame 10, the right and left front leg supports 12 and 12 and the rear leg supports 14 and 14 constituting the machine body frame 25 are integrally formed by molding means such as casting means, pressing means and forging means.

The center frame 10 is configured, as shown in Figs. 4 and 5, such that a center open hole 21 to which a swivel joint, a hydraulic piping and the like (not shown) are inserted is formed in a center portion, and a peripheral edge portion of the center open hole 21 is formed in a circle table 11 mounting a revolving bearing for the upper revolving body 3 thereon. As shown in Fig. 2, a support portion of a pair of support brackets 9a and 9a rotatably pivoting the blade 7 or the like is integrally formed with a side wall portion 12b of the front leg support 12, and a support portion of a cylinder bracket 9b pivoting an end portion of a cylinder for rotating the blade 7 or the like is integrally formed with a side wall portion 10b of the center frame 10, in a front portion of the machine body frame 25. Further, each of the support portions is configured in a shape which is joined to each of the side wall portions 10b and 12b by a smooth curved surface. A leading end portion side of each of the support brackets 9a and 9a and the cylinder bracket 9b is firmly fixed to each of the support portions in a root portion thereof by a welding operation or the like.

In place of a configuration in which the pair of support brackets 9a and 9a and the cylinder bracket 9b is constituted of two members such as the support portion integrally formed with the machine body frame 25 and a leading end portion welded to the support portion, a configuration may be employed such that an entire of the pair of support brackets 9a and 9a and the cylinder bracket 9b are integrally formed with the machine body frame 25 by a molding means. Further, a configuration may be employed such that the pair of support brackets 9a and 9a and the cylinder bracket 9b are integrally formed with the respective support portions as a whole, and respective support portions of the pair of support brackets 9a and 9a and the cylinder bracket 9b which are integrally formed with the pair of support brackets 9a and 9a and the cylinder bracket 9b are fixed to the machine body frame 25 by a welding operation or the like.

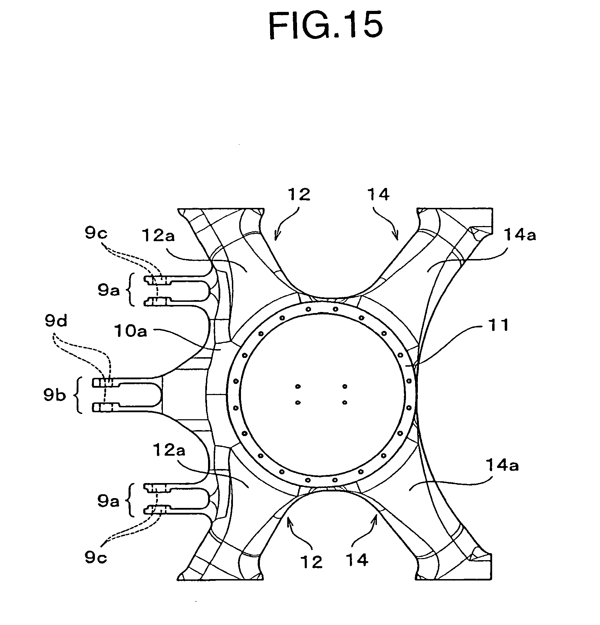

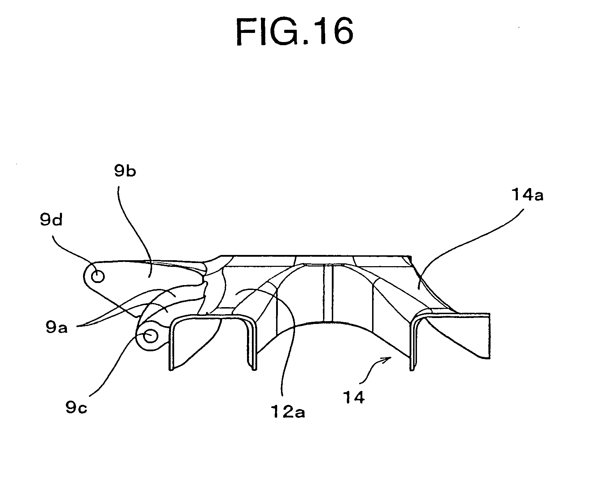

Figs. 15 and 16 show an example in which the pair of support brackets 9a and 9a and the cylinder bracket 9b are integrally formed with the machine body frame 25 by molding means, and also show formed positions of mounting holes 9c and 9d which are respectively formed in the pair of support brackets 9a and 9a and the cylinder bracket 9b. The formed positions of the mounting holes 9c and 9d shown in Figs. 15 and 16 can be preferably applied as formed positions for forming the mounting holes in the pair of support brackets 9a and 9a and the cylinder bracket 9b after fixing the pair of support brackets 9a and 9a and the cylinder bracket 9b which are formed separately from the machine body frame 25 to the machine body frame 25 by fixing means such as a welding operation.

In other words, as shown in Fig. 15, the mounting holes 9c and 9d can be respectively formed at positions which do not lap over a leading end portion of the front leg support 12 in a side view of the crawler frame, and positions which are forward of the leading end portion of the front leg support 12. Further, the formed position of the mounting hole 9d in the cylinder bracket 9b arranged in an inner side of the support brackets 9a and 9a can be set to a forward position which does not lap over the pair of support brackets 9a and 9a in a side view of the crawler frame.

Further, as shown in Fig. 16, it is possible to form the mounting hole 9d in the cylinder bracket 9b arranged in the inner side of the support brackets 9a and 9a at an upper position which does not lap over the pair of support brackets 9a and 9a in the side view of the crawler frame, and it is possible to form the mounting holes 9c in the pair of support brackets 9a and 9a at a lower position with respect to the cylinder bracket 9b.

Alternatively, it is possible to form the mounting hole 9d in the cylinder bracket 9b in a lower position with respect to the pair of support brackets 9a and 9a. At this time, it is possible to prevent a working tool forming the mounting hole 9c from being in contact with the cylinder bracket 9b, by forming the mounting holes 9c in the pair of support brackets 9a and 9a in an upper position with respect to the cylinder bracket 9b.

In the case that it is possible to control a protruding amount of the working tool after forming the mounting hole 9c so as to prevent the working tool after processing the mounting hole 9c from being in contact with the cylinder bracket 9b and make the working tool to be received within an interval between the mounting hole 9c and the cylinder bracket 9b, the mounting hole 9c can be processed even if the mounting hole 9c and the cylinder bracket 9b are arranged at an overlapping positions.

It is desirable to set at least a positional relationship between the formed position of the mounting hole 9d in the cylinder bracket 9b and the pair of support brackets 9a and 9a, including a positional relationship between the mounting holes 9c in the pair of support brackets 9a and 9a and the cylinder bracket 9b if possible, to a positional relationship in which they do not overlap in a longitudinal direction and/or a vertical direction, respectively.

Accordingly, it is possible to execute a drilling process so as to prevent the drilling tool or the like from being interfered with the front leg support 12 and the cylinder bracket 9b, at a time of forming the mounting holes 9c and 9c in the pair of support brackets 9a and 9a by applying a drilling process by means of a drill or the like. Further, since the formed positions of the mounting holes 9c and 9c in the pair of support brackets 9a and 9a are in the front side of the front leg support 12, and have the interval with respect to the cylinder bracket 9b or are at the different positions in the longitudinal and/or the vertical direction with respect to the cylinder bracket 9b so as to have a relation in which they do not lap over each other, it is possible to easily execute a centering work of the mounting holes 9c and 9c which is executed for processing, and it is possible to improve a drilling process accuracy of the mounting holes 9c and 9c.

Further, since the formed position of the mounting hole 9d in the cylinder bracket 9b is disposed at different position in the longitudinal direction and/or the vertical direction with respect to the pair of support brackets 9a and 9a arranged in the outer side of the cylinder bracket 9b and at the position in which they do not lap over each other, it is possible to execute the drilling process of the mounting hole 9d so as to prevent the working tool such as the drill for drilling the mounting hole 9d from being interfered with the pair of support brackets 9a and 9a. Further, it is possible to easily executed the centering work of the mounting hole 9d executed for processing, and it is possible to improve the drilling work accuracy of the mounting hole 9d.

Accordingly, as the working tool such as the drill for processing the mounting holes 9c and 9d, it is possible to use a normal working tool which is not interfered with the front leg support 12 and the pair of support brackets 9a and 9a. Therefore, even in the case that the drill is used as the working tool, it is possible to process the mounting holes 9c and 9d without using a long drill or without executing a particular working process. In particular, it is possible to easily process the mounting holes 9c and 9d without using a particular apparatus for preventing a center displacement in a leading end portion of the long drill which is required in the case of executing the process by using the long drill, and it is possible to improve the working accuracy without generating the center displacement.

As mentioned above, even in the case that the pair of support brackets 9a and 9a and the cylinder bracket 9b are respectively molded by an integral forming, or the case that they are separately formed from the machine body frame 25 by a plate metal and the respective support portions are fixed to the machine body frame 25 by the welding operation or the like, it is possible to accurately process the mounting holes 9c and 9d formed in the pair of support brackets 9a and 9a and the cylinder bracket 9b.

Accordingly, it is possible to accurately form the mounting holes 9c and 9d by an after processing after mounting, and it is possible to accurately form the formed position of the mounting holes with respect to the machine body frame 25. It is not necessary to execute an acute positioning work executed for fixing and mounting, unlike the case of fixing the pair of support brackets 9a and 9a and the cylinder bracket 9b to the machine body frame 25 after processing the mounting holes 9c and 9d. In the present invention, it is possible to accurately form the mounting holes 9c and 9d by a forming work of the mounting holes 9c and 9d in accordance with a normal processing work.

A description of an embodiment in which the pair of support brackets 9a and 9a, the cylinder bracket 9b and the machine body frame 25 are integrally formed by the molding means will be given on the basis of an third embodiment of the invention.

As shown in Figs. 2 and 3, track frames 16 and 16 are constituted of a main body portion formed in a longitudinal direction thereof and having a gate-like cross sectional shape, a drive wheel support body 17 supported to one end portion of the main body portion via a plate member 19, and a driven wheel support body 18 formed in the other end portion of the main body portion. A tension adjusting apparatus (not shown) for adjusting a tensile force of the crawler shown in Fig. 1 can be received within the driven wheel support body 18.

As a configuration of the track frame 16, it is possible to employ an appropriate structure such as a configuration in which the main body portion is formed in a box shape, a configuration in which the driven wheel support body 18 and the main body portion are formed as the separate bodies and are firmly fixed to each other by a welding operation and the like, in place of a configuration in which the main body portion is formed in the gate-like cross sectional shape, and a configuration in which the driven wheel support body 18 and the main body portion are integrally formed.

As shown in Fig. 3, a bottom plate 20 can be formed by firmly fixing a plate member such as a steel plate in a lower surface portion side of the machine body frame 25 by welding. The integrally formed machine body frame 25 is shown as an example in which the lower surface portion side is formed as an open surface portion, but, an upper surface portion side of the machine body frame 25 may be integrally formed as an open surface portion by molding means. In this case, an upper plate can be formed by firmly fixing a plate member such as a steel plate to the upper surface portion side of the machine body frame 25 by welding. As a shape of the upper plate, it is desirable to form such that the upper surface side is formed in a convex shape for the purpose of preventing dirt soil or the like from being accumulated on the leg support or the like.

The machine body frame is formed in such a shape that the center frame 10 is lifted up by the pair of front leg supports 12 and the pair of the rear leg supports 14 as shown in Figs. 7 and 8. The front leg support 12 and the rear leg support 14 are formed so as to be downward inclined from the center frame 10 toward the track frame 16. Accordingly, it is possible to make the center frame 10 apart from a ground surface, and it is possible to prevent damages in the lower surface side of the center frame 10 caused by an obstacle on the ground surface.

Further, since the upper surface portions of the front leg support 12 and the rear leg support 14 form a downward inclined surface from the center frame 10 toward the track frame 16, it is possible to slide down the dirt soil or the like accumulated on the front leg support 12 or the rear leg support 14 along the inclined surface. At this time, it is desirable for improving a mud dropping characteristic that a configuration of the upper surface portions of the front leg support 12 and the rear leg support 14 is made such that a lateral width of the upper surface portions become narrower as being closer to the track frame side.

As shown in Figs. 4 and 5, the machine body frame 25 constituted of the front leg support 12, the rear leg support 14 and the center frame 10 is integrally formed in a continuous curved shape by a smooth curved surface. Accordingly, even in the case that the load and the working load from the upper revolving body 3 applied to the center frame 10, and the working load at a time of traveling, revolving and working the working machine 8 applied to the track frame 16 are applied to the machine body frame 25, it is possible to receive these loads evenly by an entire of the machine body frame 25 without generating a concentrated load due to these loads.

Further, since the machine body frame 25 is integrally formed by the molding means, it is possible to optimize a thickness and a shape in a necessary position, it is possible to intend a weight saving of the machine body frame 25, and it is possible to obtain an optimum strength required in the machine body frame 25. Further, it is possible to form the front leg support 12 and the rear leg support 14 in an approximately inverted-U shape as shown in Fig. 9, and it is possible to configure the machine body frame 25 in such a shape that an approximately inverted-U-shaped space portion in the leg support and a space portion in the center frame 10 are communicated with each other, as shown in Fig. 5.

Further, it is possible to form a hole 10d for inserting a piping, a wiring and the like in a side wall portion 10b of the center frame 10. It is possible to freely arrange the piping, signal lines and electric wires etc. via the space portion of the center frame 10 or the space portion of the front leg support 12 or the rear leg support 14 formed in the manner mentioned above, and the hole 10d.

Further, as a shape of the upper surface portion of the front leg support 12 and the rear leg support 14, it is possible to employ a partial shape of an approximately conical shape having an apex in a side of the center frame 16, which can be obtained by rotating a cut area cross section of the upper surface portion 12a of the front leg support 12 around an axis 27, as shown in Figs. 10A and 10B showing the cut area cross sections taken along lines X-X and X'-X' in Fig. 6, as a shape in the upper surface portion 12a of the front leg support 12. Further, with respect to the rear leg support 14 as shown in Fig. 10B, it is possible to employ a partial shape of an approximately conical shape having an apex in a side of the center frame 16, which can be obtained by rotating a cut area cross section of the rear leg support 14 around an axis 26, as a shape in the upper surface portion 14a of the rear leg support 14.

Accordingly, the shapes of the upper surface portions of the front leg support 12 and the rear leg support 14 are formed in the approximately conical shape, and it is possible to smoothly transmit the load applied from the center frame 10 to the entire of the front leg support 12 and the rear leg support 14. The load transmitted to the front leg support 12 and the rear leg support 14 can transmit the load received by the track frame 16 without generated the stress concentration in a middle thereof. It is desirable to form shapes of joint portions 13 and 15 of the front leg support 12 and the rear leg support 14 in a smooth curved surface shapes which is brought into contact with the track frame 16 and the plate member 19 while being gradually close to the track frame 16 and the plate member 19, such that the joint portions of the track frame 16 and the plate member 19 in the front leg support 12 and the rear leg support 14 can be bonded by welding in a smooth curved surface state.

The bottom plate 20 firmly fixed by welding to the machine body frame 25 can be formed in a curved surface shape bent in a same shape as that of a lower surface edge 25a of the machine body frame 25. It is possible to smoothly transmit the force transmitted to the bottom plate 20 to the track frame 16 or the like without generating the concentrated load, by forming the bottom plate 20 in the smooth curved surface shape.

### Second embodiment

A second embodiment of the present invention is shown as a firmly fixing example in which the bottom plate 20 is firmly fixed by welding to the machine body frame 25. Accordingly, a description of a same configuration as that described in the first embodiment will be omitted by using same reference numerals as those used in the first embodiment.

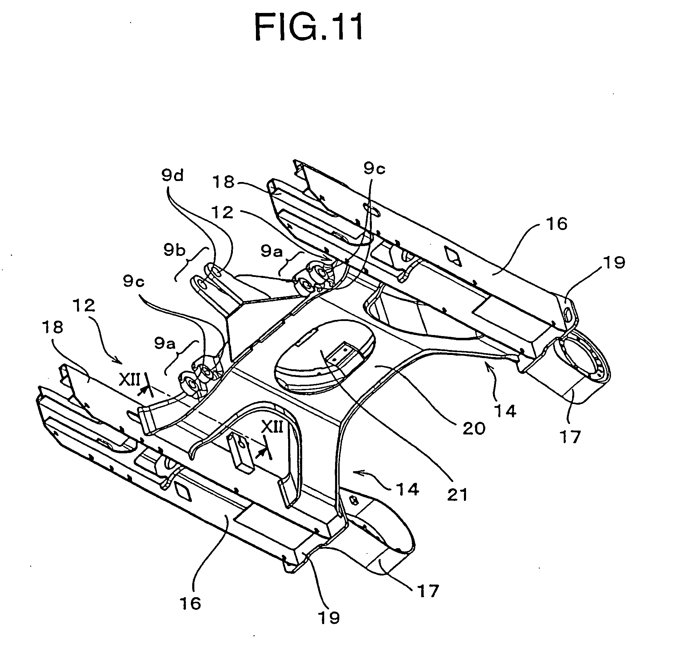

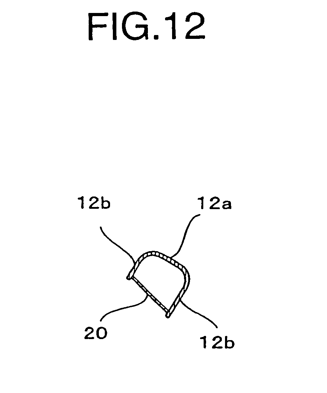

Fig. 11 is a perspective view showing a modified embodiment of a mounting structure of the bottom plate 20, and Fig. 12 is a cross sectional view of the front leg support 12 shown by a cross section along a line XII-XII in Fig. 11. Fig. 12 shows a cross sectional view in a same position as a cross section along IX-IX in Fig. 6 in the front leg support 12 shown in Fig. 11.

In Fig. 9A in accordance with the first embodiment, the bottom plate 20 is firmly fixed by welding to a lower surface edge of the front leg support 12, but, according to the second embodiment, the bottom plate 20 is firmly fixed by welding while being fitted within the mold part of the front leg support 12. Fig. 12 shows a fitting structure between the front leg support 12 and the bottom plate 20 in a horizontal cross section of the front leg support 12, but the bottom plate 20 may be mounted so as to be fitted to the lower surface edge 25a of the machine body frame 25 as shown in Fig. 11. It is possible to firmly fix the bottom plate 20 to machine body frame 25 by a welding operation or the like after mounting the bottom plate 20 to the lower surface edge 25a of the machine body frame 25 by fitting. A position in the lower surface edge 25a to which the bottom plate 20 is fitted can define a fitting position of the bottom plate 20 by forming a positioning projection or the like near the lower surface edge 25a of the machine body frame 25.

### Third embodiment

In a third embodiment of the present invention, there is shown a structure example in which an entire or a part of the support bracket 9a and the cylinder bracket 9b is integrally formed with the machine body frame 25. Accordingly, a description of a same configuration as that described in the first and second embodiments will be omitted by using same reference numerals as those used in the first and second embodiments.

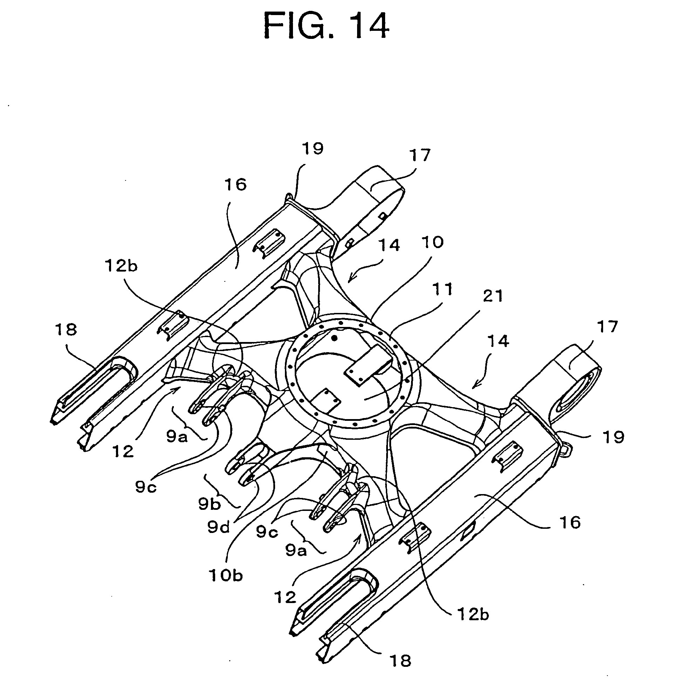

In Fig. 14, the pair of support brackets 9a and 9b are respectively arranged in the side wall portions 12b and 12b of the pair of front leg supports 12 and 12, and the cylinder bracket 9b is arranged in the side wall portion 10b of the center frame 10. The pair of support brackets 9a and 9a and the cylinder bracket 9b are formed such that a base plate of each of them is integrally formed with the machine body frame 25 by a smooth curved surface.

Since the joint portion is formed by the smooth curved surface, it is possible to prevent the stress concentration from being generated in the joint portions, and it is possible to optimize the mounting strength of the pair of support brackets 9a and 9a and the cylinder bracket 9b. Further, as shown in Figs. 15 and 16, the forming position of the mounting holes 9c and 9d of the pair of support brackets 9a and 9a and the cylinder bracket 9b are positioned so as not to lap over the front leg support 12, and the mounting holes 9c and 9d are positioned at positions which do not lap over the cylinder bracket 9b or the pair of support brackets 9a and 9a which do not form the respective mounting hole 9c or 9d, in the longitudinal direction and the vertical direction.

Accordingly, since it is possible to process each of the mounting holes 9c and 9d at a high accuracy, and the pair of support brackets 9a and 9a and the cylinder bracket 9b are firmly molded to the machine body frame 25 integrally, it is possible to accurately form the mounting holes 9c and 9d while preventing processed positions of the mounting holes 9c and 9d from being axially displaced, even at a time of the processing work using the working tool such as the drill.

The pair of support brackets 9a and 9a can be arranged in the side wall portion 10b of the center frame 10 in place of being respectively arranged in the side wall portions 12b and 12b of the pair of front leg supports 12 and 12.

Member integrally formed with the machine body frame 25 is not limited to the pair of support brackets 9a and 9a and the cylinder bracket 9b, but other members constituting the machine body frame 25 can be integrally formed with the machine body frame 25. In this case, it is desirable to arrange each of the members integrally formed with the machine body frame 25 in such a shape as to prevent the members integrally formed with the machine body frame 25 from disturbing a separating movement of the upper mold and the lower mold after an integral formation.

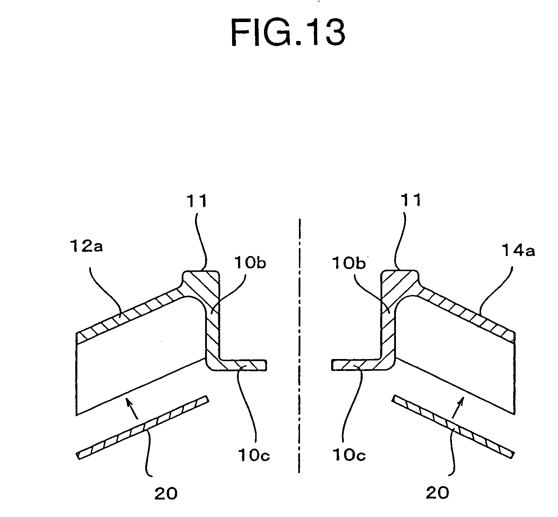

Further, as shown in Fig. 11 in the second embodiment, it is possible to integrally form other portions than a boss portion in the pair of support brackets 9a and 9a and the cylinder bracket 9b together with the machine body frame 25 by an integral molding such as the casting means, the pressing means, and the forging means, and then form the boss portion by the plate member such as a steel plate. Further, it is possible to integrally form the lower surface portion 10c of the center frame 10 with the machine body frame 25 as shown in Fig. 13.

### Fourth embodiment

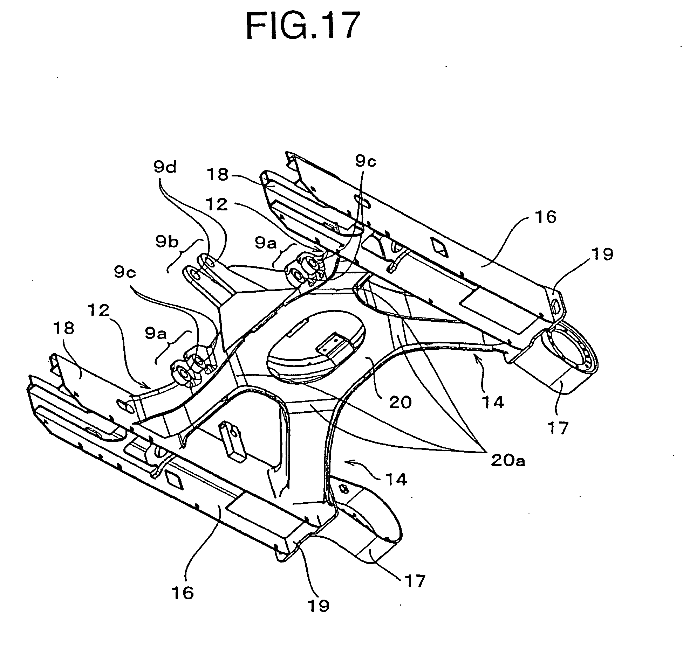

In a fourth embodiment of the present invention, there is shown a modified example of a curved shape of the bottom plate 20 as shown in Fig. 17. Accordingly, a description of a same configuration as that described in the first to third embodiments will be omitted by using same reference numerals as those used in the first to third embodiments.

As shown in Fig. 17, a curved shape in a curved portion 20a of the bottom plate 20 can be formed in an approximately conical shape which is similar to a shape described in Figs. 10A and 10B. In other words, it is possible to employ a partial shape of an approximately conical shape in which the lower surface side of the center frame 10 is set to an apex and the track frame side is set to a bottom surface side, as a curved shape in the curved portion 20a of the bottom plate 20.

Accordingly, it is possible to smoothly transmit the load or the like applied to the bottom plate 20. Further, in cooperation with the approximately conical shape formed in the upper surface portions 12a and 14a of the front leg support 12 and the rear leg support 14 as shown in Figs. 10A and 10B, it is possible to smoothly transmit the load or the like applied from the center frame 10 and the track frame 16. In other words, it is possible to smoothly transmit the load or the like without settling down a force in a middle of the load transmission and without generating any stress concentration.

Further, by forming an entire surface of the bottom plate 20 in an approximately concave shape with respect to an upper side or an approximately convex shape with respect to a lower side, it is possible to smoothly disperse the load applied to the entire surface of the bottom plate 20, and it is possible to improve a joint strength of the bottom plate 20 and the machine body frame 25.

## Claims

1. A crawler frame (4) comprising :
a machine body frame (25) constituted of a center frame (10) supporting a main machine and one or more leg supports (12, 14) provided in both right and left sides of the center frame (10); and
a pair of right and left track frames (16) provided in leading end sides of the respective leg supports (12, 14),
wherein at least one surface portion of an upper surface portion (10a, 12a, 14a) and a lower surface portion (10c, 12c, 14c) in the machine body frame (25) is formed as an open surface portion, **characterized by**
a side wall portion (10b, 12b, 14b) connecting the upper surface portion (10a, 12a, 14a) and the lower surface portion (10c, 12c, 14c) in the machine body frame (25), the upper surface portion (10a) and/or the lower surface portion (10c) opposing to the open surface portion in the center frame (10) of the machine body frame (25), and the upper surface portion (12a, 14a) or the lower surface portion (12c, 14c) opposing to the open surface portion in the leg support (12, 14) of the machine body frame (25) are integrally formed by molding means.

2. A crawler frame (4) according to claim 1, being **characterized in that** at least the open surface portion in each of the leg supports (12, 14) is covered by a plate member (19) serving as a lid body, and a portion near a side edge portion of the open surface portion and the plate member (19) are firmly fixed to each other by a welding operation.

3. A crawler frame (4) according to any one of claims 1 and 2, being **characterized in that** the main machine comprises an upper revolving body (3), and a revolving bearing for supporting the upper revolving body (3) is supported to the upper surface portion (10a) of the center frame (10).

4. A crawler frame (4) according to any one of claims 1 to 3, being **characterized in that** each of the leg supports (12, 14) provided in both the right and left sides of the center frame (10) is formed in a fork shape in a longitudinal direction in a root portion thereof.

5. A crawler frame (4) according to any one of claims 1 to 4, being **characterized in that** an outer surface shape of the machine body frame (25) integrally formed by the molding means is formed by a smooth curved surface.

6. A crawler frame (4) according to claim 5, being **characterized in that** an upper surface portion (12a, 14a) of each of leg supports (12, 14) is formed in an inclined surface which is formed in an approximately circular arc shape in a width direction of the leg support (12, 14), and the inclined surface is formed as a downward inclined surface from a center frame (10) to a track frame (16).

7. A crawler frame (4) according to claim 5, being **characterized in that** a part of a first approximately conical shape is formed in an upper surface portion (12a, 14a) of a leg support (12, 14), the first approximately conical shape is formed in a downward slope from a center frame (10) toward a track frame (16) in which a center frame side is set to an apex direction of the first approximately conical shape and a track frame side is set to a bottom line side of the first approximately conical shape.

8. A crawler frame (4) according to claim 7, being **characterized in that** a part of a second approximately conical shape is formed in a bottom surface portion of the leg support (12 , 14), and the second approximately conical shape is formed in a downward slope from the center frame (10) toward the track frame (16) in which the center frame side is set to an apex direction of the second approximately conical shape and the track frame side is set to a bottom line side of the second approximately conical shape.

9. A crawler frame (4) according to claim 5, being **characterized in that** a center frame (10) is formed in an approximately U-shape having an open hole in a center portion thereof in a horizontal cross sectional shape of the center frame (10).

10. A crawler frame (4) according to claim 5, being **characterized in that** a weld bonded portion between a leading end portion of a leg support (12, 14) and a track frame (16) is bonded by a smooth curved surface.

11. A crawler frame (4) according to any one of claims 1 to 10, being **characterized in that** an entire or a part of a support bracket (9a) rotatably supporting at least a blade (7) and/or a cylinder bracket (9b) supporting a cylinder for rotating the blade (7) is integrally formed with the machine body frame (25) by molding means.

12. A crawler frame (4) according to any one of claims 1 to 11, being **characterized in that** a mounting hole (9c,9d) formed in each of the support bracket (9a) rotatably supporting at least the blade (7) and/or the cylinder bracket (9b) supporting the cylinder for rotating the blade (7) is formed at a forward position of a leading end portion of the leg support (12) without lapping over the leading end portion of the leg support (12) arranged in a front side in a side view of the crawler frame (4).

13. A crawler frame (4) according to claim 12, being **characterized in that** the mounting hole (9c,9d) of an inside arranged bracket of the support bracket (9a) and the cylinder bracket (9b) is formed without lapping over an outside arranged bracket of the support bracket (9a) and the cylinder bracket (9b), in a side view of the crawler frame (4).

## Patentansprüche

1. Raupenfahrwerkrahmen (4), umfassend:
einen Maschinenkörperrahmen (25), bestehend aus einem Mittelrahmen (10), der eine Hauptmaschine trägt, und aus einem oder mehreren schenkelförmigen Trägerteilen (12, 14), die sowohl an der rechten als auch an der linken Seite des Mittelrahmens (10) vorgesehen sind; und
ein Paar aus einem rechten und einem linken Gleiskettengestell (16), die an vorderen Endseiten der jeweiligen schenkelförmigen Trägerteile (12, 14) vorgesehen sind,
wobei mindestens ein Außenflächenabschnitt von einem oberen Außenflächenabschnitt (10a, 12a, 14a) und einem unteren Außenflächenabschnitt (10c, 12c, 14c) im Maschinenkörperrahmen (25) als ein offener Außenflächenabschnitt geformt ist,
**dadurch gekennzeichnet, dass**
ein Seitenwandabschnitt (10b, 12b, 14b), der den oberen Außenflächenabschnitt (10a, 12a, 14a) und den unteren Außenflächenabschnitt (10c, 12c, 14c) im Maschinenkörperrahmen (25) verbindet, der obere Außenflächenabschnitt (10a) und/oder der untere Außenflächenabschnitt (10c), gegenüberliegend dem offenen Außenflächenabschnitt im Mittelrahmen (10) des Maschinenkörperrahmens (25), und der obere Außenflächenabschnitt (12a, 14a) oder der untere Außenflächenabschnitt (12c, 14c), gegenüberliegend dem offenen Außenflächenabschnitt im schenkelförmigen Trägerteil (12, 14) des Maschinenkörperrahmens (25), durch Formgebungsmittel integral geformt sind.

2. Raupenfahrwerkrahmen (4) nach Anspruch 1, **dadurch gekennzeichnet, dass** zumindest der offene Außenflächenabschnitt in jedem der schenkeiförmigen Trägerteile (12, 14) durch ein Plattenteil (19) abgedeckt ist, das als Deckelkörper dient, und ein Abschnitt nahe einem Seitenkantenabschnitt des offenen Außenflächenabschnitts und das Plattenteil (19) mittels eines Schweißvorgangs stabil aneinander befestigt sind.

3. Raupenfahrwerkrahmen (4) nach Anspruch 1 oder 2, **dadurch gekennzeichnet, dass** die Hauptmaschine einen oberen drehbaren Körper (3) aufweist, und ein Drehlager zum Lagern des oberen drehbaren Körpers (3) am oberen Außenflächenabschnitt (10a) des Mittelrahmens (10) getragen wird.

4. Raupenfahrwerkrahmen (4) nach einem der Ansprüche 1 bis 3, **dadurch gekennzeichnet, dass** jedes der schenkelförmigen Trägerteile (12, 14), die sowohl an der rechten als auch an der linken Seite des Mittelrahmens (10) vorgesehen sind, die Form einer Gabel in Längsrichtung in einem Basisabschnitt desselben besitzt.

5. Raupenfahrwerkrahmen (4) nach einem der Ansprüche 1 bis 4, **dadurch gekennzeichnet, dass** eine äußere Oberflächenform des Maschinenkörperrahmens (25), der durch die Formgebungsmittel integral geformt ist, durch eine glatte gekrümmte Oberfläche gebildet wird.

6. Raupenfahrwerkrahmen (4) nach Anspruch 5, **dadurch gekennzeichnet, dass** ein oberer Außenflächenabschnitt (12a, 14a) jedes der schenkelförmigen Trägerteile (12, 14) in einer schrägen Außenfläche gebildet wird, die eine annähernd kreisförmige Bogenform in Richtung einer Breite des schenkeiförmigen Trägerteils (12, 14) besitzt, und die schräge Außenfläche als schräge Außenfläche gestaltet ist, die von einem Mittelrahmen (10) zu einem Gleiskettengestell (16) abfällt.

7. Raupenfahrwerkrahmen (4) nach Anspruch 5, **dadurch gekennzeichnet, dass** ein Teil einer ersten annähernd konischen Form in einem oberen Außenflächenabschnitt (12a, 14a) eines schenkelförmigen Trägerteils (12, 14) gebildet wird, die erste annähernd konische Form in einer abfallenden Schräge von einem Mittelrahmen (10) in Richtung eines Gleiskettengestells (16) gebildet wird, in der eine Mittelrahmenseite auf eine Spitzenrichtung der ersten annähernd konischen Form festgelegt ist, und eine Gleiskettengestellseite auf eine untere Linienseite der ersten annähernd konischen Form festgelegt ist.

8. Raupenfahrwerkrahmen (4) nach Anspruch 7, **dadurch gekennzeichnet, dass** ein Teil einer zweiten annähernd konischen Form in einem unteren Außenflächenabschnitt des schenkelförmigen Trägerteils (12, 14) gebildet wird, und die zweite annähernd konische Form in einer abfallenden Schräge vom Mittelrahmen (10) in Richtung des Gleiskettengestells (16) gebildet wird, in der die Mittelrahmenseite auf eine Spitzenrichtung der zweiten annähernd konischen Form festgelegt ist und die Gleiskettengestellseite auf eine untere Linienseite der zweiten annähernd konischen Form festgelegt ist.

9. Raupenfahrwerkrahmen (4) nach Anspruch 5, **dadurch gekennzeichnet, dass** ein Mittelrahmen (10) annähernd eine U-Form besitzt, die ein offenes Loch in einem Mittelabschnitt derselben in einer horizontalen Querschnittform des Mittelrahmens (10) aufweist.

10. Raupenfahrwerkrahmen (4) nach Anspruch 5, **dadurch gekennzeichnet, dass** ein geschweißter verbundener Abschnitt zwischen einem vorderen Endabschnitt eines schenkelförmigen Trägerteils (12, 14) und einem Gleiskettengestell (16) durch eine glatte gekrümmte Oberfläche verbunden ist.

11. Raupenfahrwerkrahmen (4) nach einem der Ansprüche 1 bis 10, **dadurch gekennzeichnet, dass** eine Gesamtheit oder ein Teil einer Stützhalterung (9a), die zumindest einen Schild (7) drehbar haltert, und/oder einer Zylinderhalterung (9b), die einen Zylinder zum Drehen des Schilds (7) haltert, integral mit dem Maschinenkörperrahmen (25) durch Formgebungsmittel geformt ist.

12. Raupenfahrwerkrahmen (4) nach einem der Ansprüche 1 bis 11, **dadurch gekennzeichnet, dass** ein Montageloch (9c, 9d), das jeweils in der Stützhalterung (9a), die zumindest den Schild (7) drehbar haltert, und/oder in der Zylinderhalterung (9b), die den Zylinder zum Drehen des Schilds (7) haltert, an einer vorderen Stelle eines vorderen Endabschnitts des schenkelförmigen Trägerteils (12) angebracht ist ohne Überlappen des vorderen Endabschnitts des schenkeiförmigen Trägerteils (12), das in einer Vorderseite bei Seitenansicht des Raupenfahrwerkrahmens (4) angeordnet ist.

13. Raupenfahrwerkrahmen (4) nach Anspruch 12, **dadurch gekennzeichnet, dass** das Montageloch (9c, 9d) einer innen angeordneten Halterung der Stützhalterung (9a) und der Zylinderhalterung (9b) ohne Überlappen einer außen angeordneten Halterung der Stützhalterung (9a) und der Zylinderhalterung (9b) angebracht ist, und zwar bei Seitenansicht des Raupenfahrwerkrahmens (4).

## Revendications

1. Châssis à chenilles (4) comprenant :
un châssis de corps de machine (25) constitué d'un châssis central (10) qui supporte une machine principale et une ou plusieurs branches de support (12, 14) placées sur les côtés droit et gauche du châssis central (10) ; et
une paire de châssis de chenille droit et gauche (16) placés sur les côtés d'extrémité extérieure des branches de support (12, 14) respectives,
dans lequel au moins une partie de surface d'une partie de surface supérieure (10a, 12a, 14a) et d'une partie de surface inférieure (10c, 12c, 14c) du châssis de corps de machine (25) se présente sous la forme d'une partie de surface ouverte, **caractérisé par**
une partie de paroi latérale (10b, 12b, 14b) reliant la partie de surface supérieure (10a, 12a, 14a) et la partie de surface inférieure (10c, 12c, 14c) du châssis de corps de machine (25), la partie de surface supérieure (10a) et/ou la partie de surface inférieure (10c) étant opposée à la partie de surface ouverte du châssis central (10) du châssis de corps de machine (25), et la partie de surface supérieure (12a, 14a) ou la partie de surface inférieure (12c, 14c) opposée à la partie de surface ouverte de la branche de support (12, 14) du châssis de corps de machine (25) sont formées d'un seul tenant à l'aide d'un moyen de moulage.

2. Châssis à chenilles (4) selon la revendication 1, **caractérisé en ce qu'**au moins la partie de surface ouverte de chacune des branches de support (12, 14) est couverte par un élément plat (19) qui sert de corps de couvercle, et une partie proche d'une partie de bord latéral de la partie de surface ouverte et l'élément plat (19) sont solidement fixés l'un à l'autre au moyen d'une opération de soudage.

3. Châssis à chenilles (4) selon l'une quelconque des revendications 1 et 2, **caractérisé en ce que** la machine principale comprend un corps supérieur pivotant (3), et un roulement destiné à supporter le corps supérieur pivotant (3) est monté sur la partie de surface supérieure (10a) du châssis central (10).

4. Châssis à chenilles (4) selon l'une quelconque des revendications 1 à 3, **caractérisé en ce que** chacune des branches de support (12, 14) placées sur les côtés droit et gauche du châssis central (10) a une forme fourchue dans une direction longitudinale dans une partie de pied de celle-ci.

5. Châssis à chenilles (4) selon l'une quelconque des revendications 1 à 4, **caractérisé en ce que** la forme d'une surface extérieure du châssis de corps de machine (25) formée d'un seul tenant par le moyen de moulage est formée par une surface légèrement incurvée.

6. Châssis à chenilles (4) selon la revendication 5, **caractérisé en ce qu'**une partie de surface d'une partie de surface supérieure (12a, 14a) de chacune des branches de support (12, 14) a la forme d'une surface inclinée qui présente une forme d'arc à peu près circulaire dans le sens de la largeur de la branche de support (12, 14), et la surface inclinée est une surface inclinée vers le bas du châssis central (10) vers un châssis de chenille (16).

7. Châssis à chenilles (4) selon la revendication 5, **caractérisé en ce qu'**une partie d'une première forme à peu près conique est formée dans une partie de surface supérieure (12a, 14a) d'une branche de support (12, 14), la première forme à peu près conique étant formée en pente descendante du châssis central (10) vers un châssis de chenille (16) dans lequel un côté du châssis central est aligné sur une direction de sommet de la première forme à peu près conique et un côté du châssis de chenille est aligné sur un côté de ligne de fond de la première forme à peu près conique.

8. Châssis à chenilles (4) selon la revendication 7, **caractérisé en ce qu'**une partie d'une deuxième forme à peu près conique est formée dans une partie de surface inférieure de la branche de support (12, 14), et la deuxième forme à peu près conique est formée en pente descendante du châssis central (10) vers le châssis de chenille (16)
dans lequel le côté du châssis central est aligné sur une direction de sommet de la deuxième forme à peu près conique et le côté du châssis de chenille est aligné sur un côté de ligne de fond de la deuxième forme à peu près conique.

9. Châssis à chenilles (4) selon la revendication 5, **caractérisé en ce que** le châssis central (10) est approximativement en forme de U avec un trou ouvert dans sa partie centrale dans une forme de coupe en section horizontale du châssis central (10).

10. Châssis à chenilles (4) selon la revendication 5, **caractérisé en ce qu'**une partie liée par soudure entre une partie d'extrémité extérieure d'une branche de support (12, 14) et un châssis de chenille (16) est liée par une surface légèrement incurvée.

11. Châssis à chenilles (4) selon l'une quelconque des revendications 1 à 10, **caractérisé en ce que** l'intégralité ou une partie d'un support (9a) qui supporte à rotation au moins une pelle (7) et/ou un support de vérin (9b) qui supporte un vérin servant à faire tourner le pelle (7) est formée d'un seul tenant avec le châssis de corps de machine (25) à l'aide d'un moyen de moulage.

12. Châssis à chenilles (4) selon l'une quelconque des revendications 1 à 11, **caractérisé en ce qu'**un trou de montage (9c, 9d) formé dans chacun des support (9a) qui supporte à rotation au moins la pelle (7) et/ou support de vérin (9b) qui supporte le vérin servant à faire tourner le pelle (7) est formé en une position avant d'une partie d'extrémité avant de la branche de support (12) sans recouvrir la partie d'extrémité avant de la branche de support (12) située à l'avant dans une vue latérale du châssis à chenilles (4).

13. Châssis à chenilles (4) selon la revendication 12, **caractérisé en ce que** le trou de montage (9c, 9d) d'un support placé à l'intérieur du support (9a) et du support de vérin (9b) ne recouvre pas un support placé à l'extérieur du support (9a) et du support de vérin (9b), dans une vue latérale du châssis à chenilles (4).
